# EUROPÄISCHE PATENTSCHRIFT

(11) **EP 2 807 652 B1**
(45) Veröffentlichungstag und Bekanntmachung des Hinweises auf die Patenterteilung: **05.10.2016**
(21) Anmeldenummer: 13704011.9
(22) Anmeldetag: 14.01.2013
(51) Int. Cl.: G21C 19/26, G21F 5/008, G21F 5/12

(54) **VORRICHTUNG UND VERFAHREN ZUR GASDICHTEN KAPSELUNG EINES BRENNSTABES ODER EINES BRENNSTABABSCHNITTES**
DEVICE, AND METHOD FOR ENCAPSULATING A FUEL ROD OR A FUEL ROD PORTION IN A GAS-TIGHT MANNER
DISPOSITIF ET PROCÉDÉ POUR ENCAPSULER DE MANIÈRE ÉTANCHE AU GAZ UN BARREAU DE COMBUSTIBLE OU UNE PARTIE DE CELLE-CI

(30) Priorität: 26.01.2012 DE 102012201131; 02.03.2012 DE 102012203347; 20.06.2012 DE 102012210409
(43) Veröffentlichungstag der Anmeldung: 03.12.2014
(73) Patentinhaber: AREVA GmbH, 91052 Erlangen (DE)
(72) Erfinder: HUMMEL, Wolfgang, 92318 Neumarkt (DE); NEUBAUER, Egon, 91301 Forchheim (DE)
(74) Vertreter: Schlögl, Markus
(86) Internationale Anmeldenummer: PCT/EP2013/050558
(87) Internationale Veröffentlichungsnummer: WO 2013/110521

(56) Entgegenhaltungen:
- EP-A1- 1 248 270
- EP-A2- 1 600 982
- DE-A1- 1 450 318
- DE-B3-102010 036 373

## Beschreibung

Die Erfindung bezieht sich auf eine Vorrichtung und ein Verfahren zur Aufnahme und gasdichten Kapselung eines Brennstabes oder eines Brennstababschnittes.

Zu Transport- und/oder Lagerzwecken werden defekte Brennstäbe oder Brennstababschnitte vakuum- und fluiddicht in Behälter oder Kapseln eingebracht, wie sie beispielsweise aus der DE 196 40 393 B4, der EP 1 248 270 A1, der EP 1 600 982 B1 und der WO 2010/084122 A1 bekannt sind. Da die Kapselung eines Brennstabes oder eines Brennstababschnittes möglichst nahe am Ort der ursprünglichen Lagerung, d.h. innerhalb des Brennelementlagerbeckens unter Wasser erfolgt, ist es unvermeidlich, dass beim Einbringen des Brennstabes oder Brennstababschnittes in den geöffneten Behälter Wasser in diesen eindringt. Dieses Wasser muss jedoch aus dem Brennstabbehälter entfernt werden, da es aufgrund der Nachzerfallswärme verdampfen und zu einem unzulässig hohen Innendruck führen würde. Aus diesem Grund weisen die für die aus der DE 196 40 393 B4, der EP 1 248 270 A1, der EP 1 600 982 B1 bekannten Behälter verwendeten Verschlusselemente einen Kanal auf, über den Gas eingeblasen werden kann, so dass das im Behälter befindliche Wasser ausgetrieben wird. Bei den aus der DE 196 40 393 B4 und der EP 1 248 270 A1 jeweils bekannten Verschlussstopfen ist in jedem Verschlussstopfen ein koaxialer Kanal vorgesehen, in dem ein federbelastetes Ventil angeordnet ist, das mit einem Schließelement den Kanal fluiddicht verschließt. Zum Austreiben des Wassers werden diese Schließelemente mit Hilfe eines Stößels von ihrem Ventilsitz abgehoben und es wird über einen dann offenen Kanal ein Gas eingeblasen und das Wasser über den ebenfalls offenen Kanal des gegenüber liegenden Verschlusselementes ausgetrieben. Bei beiden bekannten Behältern erfolgt dieses Austreiben des Wassers, wenn sich die Verschlusselemente durch Verschrauben, Verschweißen oder Verformen in ihrer Endmontageposition befinden, in der sie den Behälter fluiddicht verschließen.

Bei dem aus der EP 1 600 982 B1 bekannten Behälter ist ein auf ein Außengewinde des Behälters aufschraubbares Verschlusselement vorgesehen, in dem ein Dichtelement axial verschiebbar gelagert ist. In einer Zwischenposition des Verschlusselementes, in der dieses noch nicht festgezogen ist, liegt zwischen der Dichtfläche des Dichtelementes und der mit ihr als Dichtpaarung zusammenwirkenden Stirnfläche des hohlzylindrischen Behälterteils eine Trennfuge vor, die mit einer seitlichen Belüftungsöffnung im Verschlusselement kommuniziert und in dieser Zwischenposition den Außenraum mit dem Spülraum des hohlzylindrischen Behälterteils fluidisch verbindet.

Um mit den aus der DE 196 40 393 B4, der EP 1 248 270 A1, der EP 1 600 982 B1 bekannten Verschlusselementen sowohl ein Austreiben des im Behälter befindlichen Wassers als auch in einem Endmontagezustand ein zuverlässiges fluiddichtes Verschließen des Behälters zu ermöglichen, sind diese Verschlusselemente mehrteilig und relativ aufwendig aufgebaut. Darüber hinaus erfordert ihre Handhabung einen entsprechend hohen Manipulationsaufwand.
Bei dem aus der WO 2010/084122 A1 bekannten Behälter ist als Verschlusselement eine Kappe vorgesehen, die auf ein hohlzylindrisches Behälterteil aufgeschoben und mit dessen Stirnfläche stoffschlüssig verbunden wird. Das Verschließen des Behälters erfolgt in einer fluiddichten Kammer. Vor dem Verschließen, d.h. bei nicht auf den hohlzylindrischen Behälterteil aufgesetzter Kappe wird die in der Kammer befindliche Flüssigkeit abgezogen und anschließend eine Vakuumtrocknung durchgeführt. Aufgrund der innerhalb des mit einem Brennstab bestückten Behälters zwischen Brennstab und Innenwand des Behälters vorliegenden engen Spalte, kann unter Umständen Restwasser im Behälter verbleiben.

Aus DE 10 2010 036 373 B3 ist eine Vorrichtung zur gasdichten Kapselung eines Brennstabes in einem Behälter bekannt, die zwei Bearbeitungskammern aufweist, welche voneinander beanstandet auf einer gemeinsamen Symmetrieachse angeordnet sind. Eine erste Bearbeitungskammer weist hierbei einen Einlass und eine zweite Bearbeitungskammer einen Auslass für Spülgas auf. Beide Bearbeitungskammern weisen Mittel zum gasdichten Verschließen des Behälters auf.

Der Erfindung liegt die Aufgabe zu Grunde, eine Vorrichtung sowie ein Verfahren anzugeben, mit denen ein einen Brennstab oder Brennstababschnitt enthaltender Behälter mit möglichst geringem Gehalt an Restwasser verschlossen werden kann.

Hinsichtlich der Vorrichtung wird die Aufgabe gemäß der Erfindung gelöst mit den Merkmalen des Patentanspruches 1, gemäß denen die Vorrichtung eine erste und eine zweite Bearbeitungskammer aufweist, die voneinander beabstandet auf einer gemeinsamen Systemachse angeordnet sind. Erste und zweite Bearbeitungskammer sind außerdem mit einer ersten bzw. zweiten Öffnung zum Aufnehmen eines in die Bearbeitungskammer mündenden Freiendes eines Behälters derart versehen, dass erste und zweite Bearbeitungskammer bei zwischen diesen angeordnetem Behälter ausschließlich über diesen selbst fluidisch miteinander verbunden werden können. Die erste Bearbeitungskammer weist einen Einlass und die zweite Bearbeitungskammer einen Auslass für ein Spülgas auf, wobei jede Bearbeitungskammer zusätzlich Mittel zum gasdichten Verschließen des Behälters aufweist.

Da erste und zweite Bearbeitungskammer bei zwischen den Bearbeitungskammern angeordnetem Behälter ausschließlich über diesen selbst fluidisch miteinander verbunden werden können, reicht es aus, Spülgas ausschließlich in die erste Bearbeitungskammer einzublasen, das dann zwangsläufig über im Verschlussstopfen befindliche Öffnungen durch das hohlzylindrische Behälterteil gedrückt wird und ausschließlich durch dieses in die zweite Bearbeitungskammer gelangt. Dadurch wird das in diesem Behälterteil befindliche Wasser sicher ausgeblasen. Somit ist es nicht erforderlich, eine Spülgasleitung unmittelbar an einen im Verschlussstopfen angeordneten Kanal anzuschließen.

Der Behälter weist ein hohlzylindrisches Behälterteil auf, das an seinen beiden Freienden jeweils mit einem einteiligen Verschlussstopfen fluiddicht verschlossen ist. Der Verschlussstopfen ist mit einem Kanal versehen, der ausschließlich in einer bei der Montage vor Erreichen einer Endposition eingenommenen Zwischenposition, in der er mit einem axialen Überstand aus dem Behälterteil herausragt, den Spülraum des Behälterteils mit dem Außenraum fluidisch verbindet.

Da der Verschlussstopfen einteilig ausgebildet ist, kann dieser technisch sehr einfach gestaltet und mit geringem Aufwand hergestellt werden. Da außerdem der im Verschlussstopfen befindliche Kanal den Spülraum des Behälterteils mit dem Außenraum fluidisch nur dann verbindet, wenn sich der Verschlussstopfen in einer Zwischenposition befindet, sind zusätzliche Schließelemente innerhalb dieses Kanals nicht erforderlich, so dass auch dieser auf einfache Weise durch Bohrungen oder Ausnehmungen gefertigt werden kann.

Der Begriff Verschlussstopfen im Sinne der vorliegenden Erfindung ist dahingehend zu verstehen, dass zum Einbringen des Verschlussstopfens in das hohlzylindrische Behälterteil nur ein "Stopfen", d.h. ein Einschieben in Axialrichtung und keine Drehbewegung erforderlich ist.

Bei der Zwischenposition handelt es sich um eine Position, in der der Verschlussstopfen bereits in das hohlzylindrische Behälterteil eingeschoben ist, jedoch noch nicht die Endposition erreicht hat, in der er das hohlzylindrische Behälterteil durch eine stoffschlüssige oder kraftschlüssige Verbindung fluiddicht verschließt.

Bevorzugt weist der Kanal einen von einer innenliegenden Stirnseite des Verschlussstopfens parallel zu seiner Längsachse verlaufenden ersten Kanalabschnitt auf, der in einem quer zu dieser Längsachse verlaufenden, von einer Mantelfläche des Verschlussstopfen ausgehenden zweiten Kanalabschnitt mündet. Ein solcher Kanal kann durch Bohrungen in Längs- bzw. Querrichtung einfach hergestellt werden.

Um den Verschlussstopfen sicher in der Zwischenposition zu halten sind am Verschlussstopfen und/oder hohlzylindrischen Behälterteil am Außenumfang bzw. am Innenumfang Rastmittel vorgesehen, die den Verschlussstopfen in dieser Zwischenposition lösbar fixieren.

Wenn der Verschlussstopfen in der Endmontageposition mit einem ringförmig umlaufenden Flansch auf einer Stirnfläche des hohlzylindrischen Behälterteils aufsitzt, können Verschlussstopfen und hohlzylindrisches Behälterteil durch eine zwischen Flansch und Stirnfläche ringförmig umlaufende Schweiß- oder Lötnaht fertigungstechnisch einfach fluiddicht miteinander verbunden werden.

Alternativ zu einer derartigen stoffschlüssigen Verbindung kann der Verschlussstopfen im hohlzylindrischen Behälterteil auch durch eine Schrumpfverbindung fluiddicht fixiert sein.

In einer vorteilhaften Ausführungsform der Vorrichtung sind die Bearbeitungskammern entlang der Systemachse verschiebbar angeordnet. Auf diese Weise kann der Behälter zwischen den Bearbeitungskammern angeordnet werden. Durch Verschieben der Bearbeitungskammern werden die Freienden des Behälters durch die Öffnungen hindurchgeführt, so dass sie in die Bearbeitungskammern hineinragen.

In einer besonders vorteilhaften Ausgestaltung der Erfindung ist jede Bearbeitungskammer mit einem in die Öffnung ringförmig umgebenden und in Richtung der Systemachse zur Öffnung hin zustellbaren Druckstempel versehen, mit dem durch Vorschub in Richtung der Systemachse eine Kraft mit einer quer dazu wirkenden Komponente auf einen an der Öffnung angeordneten und diese umgebenden Dichtring ausgeübt wird. Durch diese Maßnahme kann der Behälter auf einfache Weise fluiddicht durch die Öffnung an die jeweilige Bearbeitungskammer angeschlossen werden, so dass die Bearbeitungskammern ausschließlich über den Behälter mechanisch miteinander verbunden sind.

In einer alternativen Ausgestaltung der Vorrichtung sind erste und zweite Bearbeitungskammer entlang der Systemachse über ein mit seinen stirnseitigen Enden in die erste bzw. zweite Bearbeitungskammer hineinragendes Verbindungsrohr miteinander starr verbunden. In dieses Verbindungsrohr ist der Behälter derart einführbar, dass er mit seinen Freienden über das Verbindungsrohr hinausragt. Durch diese Maßnahme ist der Aufbau der Vorrichtung vereinfacht, da die Bearbeitungskammern nicht mehr relativ zueinander verschiebbar gelagert sein müssen.

In einer weiteren vorteilhaften Ausgestaltung sind Einlass und Auslass jeweils durch ein in die erste bzw. zweite Bearbeitungskammer mündendes Einlassrohr bzw. Auslassrohr gebildet, deren Mittelachsen mit der Systemachse zusammenfallen und zwischen denen das Verbindungsrohr jeweils mit einem axialen Abstand angeordnet ist, so dass zwischen den einander zugewandten Stirnseiten ein erster bzw. zweiter Freiraum verbleibt. Dabei ist das Verbindungsrohr an das Einlassrohr und an das Auslassrohr mit einer axial in eine erste Stellung verschiebbar angeordneten ersten bzw. zweiten Hülse fluiddicht anschließbar, wobei erste und zweite Hülse in eine zweite Stellung verschiebbar sind, in der erster und zweiter Freiraum ersten bzw. zweiten Bearbeitungskammer hin offen sind. In dieser Ausgestaltung muss das Spülgas nicht mehr durch die Bearbeitungskammern geleitet werden, da in diesen über das Einlass- bzw. Auslassrohr und das Verbindungsrohr ein als Spülraum dienender fluiddichter Kanal geschaffen wird, so dass bei dem unter Wasser stattfindenden Bestücken der Vorrichtung mit dem Behälter kein Wasser in einen außerhalb dieses Spülraums befindlichen Arbeitsraum der Bearbeitungskammer eindringen kann, in dem sich die zum fluiddichten Verschließen des Behälters erforderlichen Werkzeuge befinden.

Vorzugsweise ist zwischen Behälter und Verbindungsrohr ein Dichtelement angeordnet, das derart einstellbar ist, dass Einlassrohr und Auslassrohr ausschließlich über den Behälter fluidisch miteinander verbunden sind.

Um ergänzend zu dem Austreiben des Wassers aus dem Behälter mit Hilfe des eingepressten Spülgases außerdem gegebenenfalls in einen defekten, undichten Brennstab oder in Brennstababschnitte und damit in die Brennstoffmatrix eingedrungenes Wasser zu entfernen, ist in einer vorteilhaften Ausgestaltung der Vorrichtung vorgesehen, dass Einlass und Auslass über eine außerhalb der Bearbeitungskammern verlaufende Bypassleitung derart miteinander verbindbar sind, dass ein geschlossener Gaskreislauf entsteht, wobei im Gaskreislauf eine Pumpe und eine Heizeinrichtung zum Umwälzen bzw. Heizen eines im Gaskreislauf befindlichen Heizgases angeordnet ist. Auf diese Weise kann das in der Brennstoffmatrix gebundene Wasser verdampft und die Brennstoffmatrix getrocknet werden.

Wenn jede Bearbeitungskammer einen Druckstempel zum Ausüben einer in Richtung der Systemachse wirkenden Druckkraft aufweist, kann der Verschlussstopfen eines Behälters besonders einfach in das hohlzylindrische Behälterteil eingeschoben werden. Wenn jede Bearbeitungskammer einen drehbar um die Systemachse und zu dieser hin zustellbar gelagerten Schweißkopf aufweist, kann der Verschlussstopfen mit dem hohlzylindrischen Behälterteil verschweißt werden, ohne dass dieses hierzu in eine Drehbewegung versetzt werden muss.

Wenn außerdem jede Bearbeitungskammer eine drehbar um die Systemachse und zu dieser zustellbar gelagerte Reinigungsbürste enthält, können die zu verschweißenden Teile vor dem Schweißen in situ gesäubert und somit die Qualität der Schweißnaht verbessert werden.

Der konstruktive Aufwand wird außerdem verringert, wenn Schweißkopf und Reinigungsbürste auf einem gemeinsamen Drehkranz angeordnet sind.

Hinsichtlich des Verfahrens wird die Aufgabe gemäß der Erfindung gelöst mit einem Verfahren mit den Merkmalen des Patentanspruches 11 unter Verwendung einer erfindungsgemäßen Vorrichtung sowie eines Behälters. Das Verfahren umfasst folgende Verfahrensschritte:
a) Einbringen eines Freiendes des mit den Verschlussstopfen in der Zwischenposition versehenen und den Brennstab oder den Brennstababschnitt enthaltenden Behälterteils durch die erste Öffnung in die erste Bearbeitungskammer und des gegenüberliegenden Freiendes durch die zweite Öffnung in die zweite Bearbeitungskammer, derart, dass erste und zweite Bearbeitungskammer ausschließlich über diesen selbst fluidisch miteinander verbunden sind,
b) Einblasen eines Spülgases in die erste Bearbeitungskammer und austreiben des in den miteinander über das Behälterteil fluidisch verbundenen Bearbeitungskammern und dem Behälterteil befindlichen Wasser durch Aufbau eines Überdrucks,
c) Eindrücken des Verschlussstopfens in das Behälterteil bis zur Endposition und fluiddichtes Verbinden des Verschlussstopfens mit dem Behälterteil.

In einer besonders vorteilhaften Ausgestaltung der Erfindung wird nach dem Austreiben des Wassers durch das Behälterteil Heizgas gepumpt, um auf diese Weise durch Verdampfen des Wassers den Wassergehalt im Behälterteil zusätzlich zu reduzieren. Mit anderen Worten: Es findet keine Vakuumtrocknung statt. Wenn außerdem das Heizgas in einem geschlossenen Gaskreislauf bis zum Erreichen eines Endwertes umgepumpt wird, bei dem der Feuchtegehalt nicht mehr ansteigt, ist es möglich, aus dem Feuchtegehalt die absolute Menge des innerhalb des Behälters befindlichen, während des Umwälzen des Heizgases gasförmigen Wassers zu bestimmen, so dass nach Verschließen des Behälters genaue Aussagen über den Gehalt an im Behälter verbleibenden Wasser getroffen werden können.

Vorzugsweise wird der Verschlussstopfen mit dem Behälterteil mit einer ringförmig umlaufenden Schweiß- oder Lötnaht stoffschlüssig verbunden oder alternativ im Behälterteil mit einer Schrumpfverbindung fluiddicht fixiert.

Zur weiteren Erläuterung der Erfindung wird auf die in den Figuren dargestellten Ausführungsbeispiele verwiesen. Es zeigen:
Fig. 1 einen Behälter mit einem in der Zwischenposition vormontierten Verschlussstopfen in einem schematischen Längsschnitt,
Fig. 2 einen Teilschnitt des mit dem Verschlussstopfen entlang einer ringförmigen Schweißnaht verschlossenen Behälters,
Fig. 3a, b jeweils einander gegenüberliegende Bearbeitungskammern einer Vorrichtung gemäß der Erfindung mit in Arbeitsposition montiertem Behälter während des Entwässerns ebenfalls jeweils in einem schematischen teilweisen Längsschnitt,
Fig. 4a, b jeweils einander gegenüberliegende Bearbeitungskammern einer alternativen Ausführungsform einer Vorrichtung gemäß der Erfindung mit in Arbeitsposition während des Entwässerns montiertem Behälter ebenfalls jeweils in einem schematischen teilweisen Längsschnitt,
Fig. 5a, b die Bearbeitungskammern in einer nach erfolgtem Entwässern und Trocknen beim Schweißen vorliegenden Arbeitsposition.

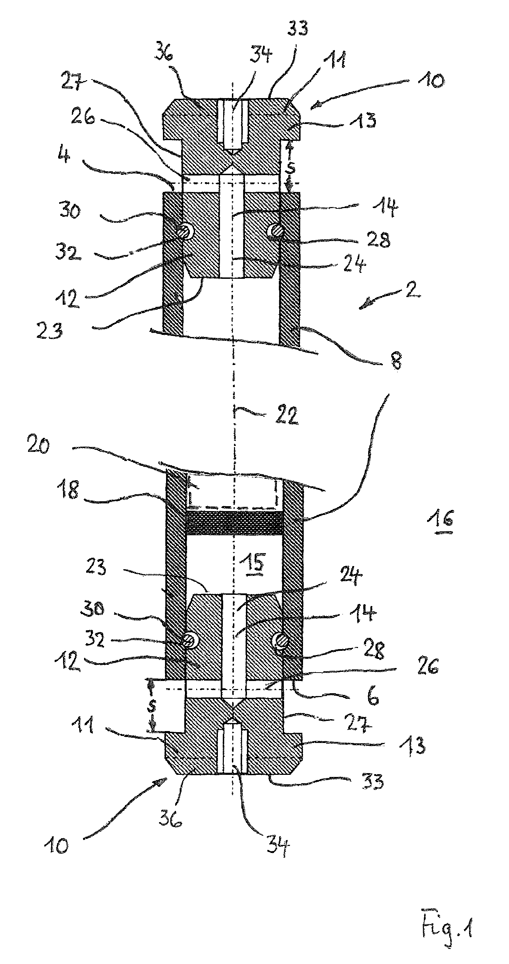

Gemäß Fig. 1 umfasst ein Behälter 2 ein an seinen Stirnseiten 4 und 6 offenes, hohlzylindrisches Behälterteil 8. An den Stirnseiten 4, 6 ist jeweils ein einteiliger Verschlussstopfen 10 teilweise bis zu einer Zwischenposition eingeschoben. Jeder Verschlussstopfen 10 umfasst ein Kopfteil 11 und einen zylindrischen Schaft 12, dessen Außendurchmesser nur geringfügig kleiner ist als der Innendurchmesser des Behälterteils 8. Das Kopfteil 11 umfasst einen ringförmig umlaufenden Flansch 13, dessen Außendurchmesser mit dem Außendurchmesser des Behälterteils 8 übereinstimmt. In der Zwischenposition ragt der Verschlussstopfen 10 über das hohlzylindrische Behälterteil 8 gegenüber seiner Endposition zusätzlich um einen axialen Überstand s hinaus, so dass sich ein unterhalb des Kopfteiles 11 befindlicher Teil des Schaftes 12 außerhalb des Behälterteils 8 befindet.

Jeder Verschlussstopfen 10 ist mit einem Kanal 14 versehen, der in dieser Zwischenposition den Innenraum 15 mit dem Außenraum 16 fluidisch verbindet.

Im zylindrischen Behälterteil 8 ist an dem bei der Handhabung unteren Freiende ein sintermetallisches Filterelement 18 angeordnet, das verhindert, dass grobe Partikel aus dem noch unverschlossenen Behälter 2 austreten können, nachdem diese mit einem in der Figur gestrichelt angedeuteten Brennstab 20 oder Brennstababschnitt bestückt worden ist. Falls ein defekter Brennstab 20 gekapselt werden soll, in den Wasser eingedrungen ist, wurde dieser vorher im Bereich seiner beiden Endstopfen geöffnet und die in ihm enthaltenen gasförmigen und durch die Öffnungen entweichenden gasförmigen radioaktiven Spaltprodukte wurden gezielt abgeführt.

Der in der Zwischenposition mit dem Außenraum 16 fluidisch verbundene Kanal 14 ist im Beispiel durch einen zentralen entlang einer Längsmittelachse 22 verlaufenden und von der dem Innenraum 15 zugewandten Stirnseite 23 ausgehenden ersten Kanalabschnitt 24 in Form einer Sacklochbohrung sowie zumindest einem zweiten, quer dazu verlaufenden Kanalabschnitt 26, im Beispiel eine Durchgangsbohrung, gebildet, wobei der erste Kanalabschnitt 24 in diesen zweiten Kanalabschnitt 26 mündet. Die Stelle oder die Stellen, an der bzw. an denen der zweite oder die zweiten Kanalabschnitte 26 die Mantelfläche 27 des Verschlussstopfens 10 durchstoßen, d.h. die Mündungsöffnungen des oder der zweiten Kanalabschnitte 26, sind in dem Bereich des Schaftes 12 des Verschlussstopfens 10 angeordnet, der sich in der Zwischenposition des Verschlussstopfens 10 außerhalb des Behälterteils 8 befindet.

Der Schaft 12 des Verschlussstopfens 10 ist zwischen seiner in das Behälterteil 8 hineinragenden Stirnseite 23 und der oder den Mündungsöffnungen mit einer ringförmigen Ausnehmung oder Nut 28 versehen, die zur Aufnahme eines Sicherungsringes 30 dient. Das hohlzylindrische Behälterteil 8 ist an seiner Innenoberfläche im Bereich der Freienden ebenfalls jeweils mit einer ringförmig umlaufenden Eindrehung 32 versehen, in die der in die Nut 28 eingelegte Sicherungsring 30 beim Einführen des Verschlussstopfens 10 in das hohlzylindrische Behälterteil 8 einrastet. Sicherungsring 30 und Nut 28 dienen dementsprechend als Rastmittel, die den Verschlussstopfen 10 in der Zwischenposition lösbar fixieren.

An seiner vom hohlzylindrischen Behälterteil 8 abgewandten Stirnseite 33 ist der Verschlussstopfen 10 mit einer Gewindebohrung 34 versehen, die zum Einschrauben eines Stangenwerkzeuges dient, mit dem der Verschlussstopfen 10 gehandhabt wird. Eine quer zu dieser Gewindebohrung 34 verlaufende, gestrichelt angedeutete Nut 36 dient als Drehmomentstütze beim Einschrauben des in der Figur nicht dargestellten Stangenwerkzeuges in die Gewindebohrung 34.

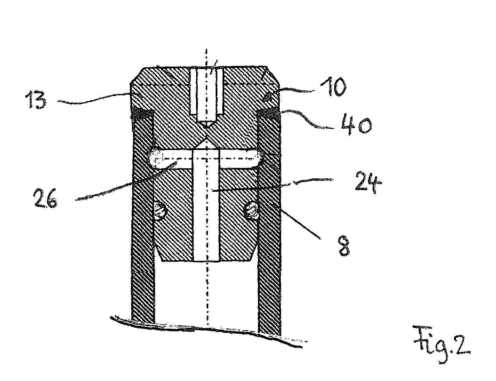

Fig. 2 zeigt den Behälter 2 mit einem oberen Verschlussstopfen 10 in einer Endposition, in der er um die Strecke s tiefer in das Behälterteil 8 eingeschoben ist, bis der Flansch 13 mit seiner Dichtfläche auf der Stirnfläche des hohlzylindrischen Behälterteils 8 aufsitzt und sich die Mündungsöffnungen des oder der zweiten Kanalabschnitte 26 innerhalb des Behälterteils 8 befinden. In dieser Endposition ist der Flansch 13 mit der Stirnseite 4 des Behälterteils 8 entlang einer ringförmig umlaufenden Schweißnaht 40 verschweißt, so dass der Verschlussstopfen 10 das Behälterteil 8 fluiddicht verschließt.

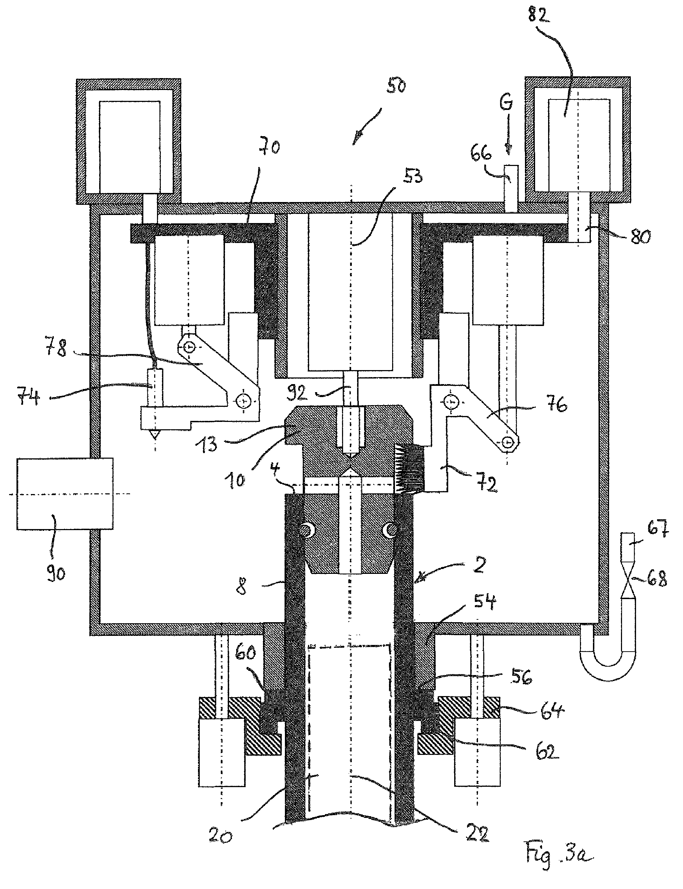

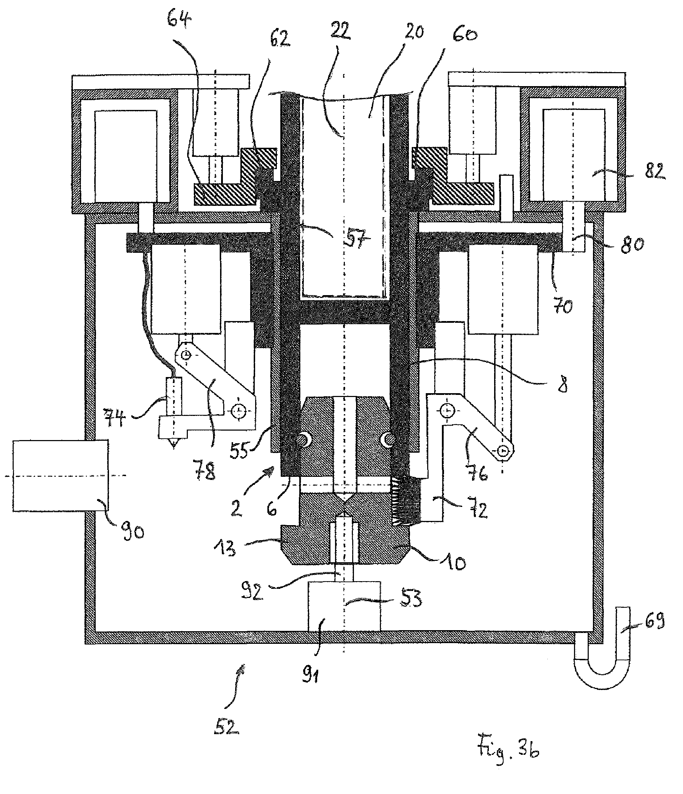

Gemäß Fig. 3a, b umfasst eine Vorrichtung zum beidseitigen gasdichten Verschließen des in Fig. 1 dargestellten Behälters eine erste (obere) Bearbeitungskammer 50 (Fig. 3a) und eine zweite (untere) Bearbeitungskammer 52 (Fig. 3b). Die erste und zweite Bearbeitungskammer 50, 52 sind voneinander beabstandet und auf einer gemeinsamen, vertikal orientierten Systemachse 53 positionierbar und entlang dieser relativ zueinander verschiebbar angeordnet. Erste und zweite Bearbeitungskammer 50, 52 sind mit einander zugewandten und durch erste bzw. zweite Führungshülsen 54, 55 gebildete ersten bzw. zweiten Einführöffnungen 56, 57 versehen, die in Richtung der Systemachse 53 einander gegenüberliegend angeordnet sind, und durch die der mit einem Brennstab 20 oder einem Brennstababschnitt bestückte Behälterteil 8 mit seinen stirnseitigen Freienden und den dort in der Zwischenposition vormontierten Verschlussstopfen 10 eingeführt und ausgerichtet wird, so dass Längsmittelachse 22 des Behälterteils 8 und Systemachse 53 der Vorrichtung zusammenfallen.

Nach Einführen der stirnseitigen Enden des mit dem vormontierten Verschlussstopfen 10 versehenen Behälterteils 8 durch die Einführöffnungen 56, 57 werden erste und zweite Bearbeitungskammern 50, 52 im Bereich dieser Einführöffnungen 56, 57 fluiddicht verschlossen, indem auf einen den Behälter 2 ringförmig umgebenden Dichtring 60 durch axialen Vorschub in Richtung der Systemachse 53 eines ebenfalls mit einem elastischen Dichtring 62 versehenen ringförmigen Druckstempels 64 eine Kraft mit einer quer zur Systemachse 53 wirkenden Komponente ausgeübt wird, so dass der Dichtring 60 an den Außenumfang des Behälterteils 8 und an den Innenrand der Einführöffnung 56, 57 angedrückt wird, und so einen zwischen dem Behälterteil 8 und der Einführöffnung 56 bzw. 57 befindlichen Spalt schließt. In dieser Montageposition, in der sich die Verschlussstopfen noch in der Zwischenposition befinden, sind erste und zweite Bearbeitungskammer 50, 52 ausschließlich über das Behälterteil 8 fluidisch miteinander verbunden.

Die erste Bearbeitungskammer 50 weist einen Einlass 66 auf, über den Spülgas G, beispielsweise Argon Ar mit hohem Druck eingeblasen werden kann. An ihrer Unterseite ist die erste Bearbeitungskammer 50 mit einem Auslass 67 versehen, der ein Ventil 68 aufweist, das zum Aufbau eines Innendrucks geschlossen wird. Die zweite Bearbeitungskammer 52 ist an ihrer Unterseite mit einem Siphon versehen, der als Auslass 69 für das Spülgas G dient.

In jeder Bearbeitungskammer 50, 52 ist drehbar um die Systemachse 53 ein Drehkranz 70 gelagert, an den zur Systemachse 53 hin zustellbar eine Reinigungsbürste 72 und eine Schweißkopf 74 jeweils über einen Kipphebel 76 bzw. 78 gelagert sind. Der Drehkranz 70 wird über ein Ritzel 80 von einem gekapselten Motor 82 angetrieben. Eine Beobachtungskamera 90 ermöglicht eine Kontrolle der zum Verschließen des Behälters auszuführenden Arbeiten.

In der ersten und zweiten Bearbeitungskammer 50 und 52 ist jeweils gegenüber der Öffnung 54 bzw. 56 ein von einem Hubzylinder 91 betätigter Druckstempel 92 angeordnet, mit dem eine in Richtung der Systemachse 53 wirkende Druckkraft auf den Verschlussstopfen 10 ausgeübt werden kann.

Nach Einführen des mit dem Verschlussstopfen 10 in der Zwischenposition versehenen Behälterteils 8 in die erste und zweite Bearbeitungskammer 50, 52 bis zu einem durch den Druckstempel 92 jeweils gebildeten Anschlag werden die Öffnungen 56 und 57 verschlossen. Anschließend wird das Spülgas G unter hohem Druck bei geöffnetem Ventil 68 in die erste Bearbeitungskammer 50 eingeleitet. Auf diese Weise wird die erste Bearbeitungskammer 50 trocken gesetzt. Nach Schließen des Ventils 68 durchströmt das Spülgas G dann den mit den Verschlussstopfen 10 in der Zwischenposition versehenen Behälterteil 8 und treibt das im Behälterteil 8 und in der zweiten Bearbeitungskammer 52 befindliche Wasser über den Auslass 69 aus. Wenn aus diesem Auslass 69 Gasblasen aufsteigen, ist dies ein Indiz dafür, dass erste und zweite Bearbeitungskammer 50, 52 sowie das Behälterteil 8 kein Wasser mehr enthalten. Wenn im Auslass 69 ein Ventil eingebaut ist, kann nach Schließen dieses Ventils die Zufuhr von Spülgas G gestoppt und der in den Bearbeitungskammern 50, 52 herrschende Überdruck abgebaut werden.

Anschließend werden die Reinigungsbürsten 72 zugestellt und durch Drehbewegung der Drehkränze 70 werden die Stirnflächen an den Stirnseiten 4, 6 des Behälters 2 sowie die Dichtflächen der Flansche 13 gereinigt. Nach erfolgter Reinigung werden die Reinigungsbürsten 72 zurückgefahren und es werden die Druckstempel 92 betätigt, die den Verschlussstopfen 10 in den Behälter 2 drücken bis die Dichtfläche des Flansches 13 auf der jeweiligen Stirnfläche des hohlzylindrischen Behälterteils 8 aufsitzen. Nach erfolgtem Einschieben der Dichtstopfen 10 werden die Schweißköpfe 74 zugestellt und durch Drehbewegung des Drehkranzes 70 wird der Verschlussstopfen 10 mit dem hohlzylindrischen Behälterteil 8 entlang einer ringförmigen Schweißnaht 40 (Fig. 2) verschweißt. Alternativ hierzu können Verschlussstopfen 10 und Behälterteil 8 auch entlang einer ringförmigen Lötnaht miteinander verlötet werden. Anstelle einer derartigen stoffschlüssigen Verbindung kann auch eine Schrumpfverbindung vorgesehen sein, indem die Enden des Behälters 2 induktiv aufgeheizt werden und die Verschlussstopfen 10 in die auf diese Weise aufgeweiteten Enden eingeschoben werden. Nach Abkühlen der Enden ist der Verschlussstopfen fluiddicht im Behälterteil 8 fixiert.

Nach erfolgtem Verschweißen werden die Druckstempel 64 zurückgefahren, der Behälter 2 in einer Halterung aufgenommen und wenigstens eine der Bearbeitungskammern 50, 52 axial verschoben, so dass der Behälter 2 entnommen werden kann.

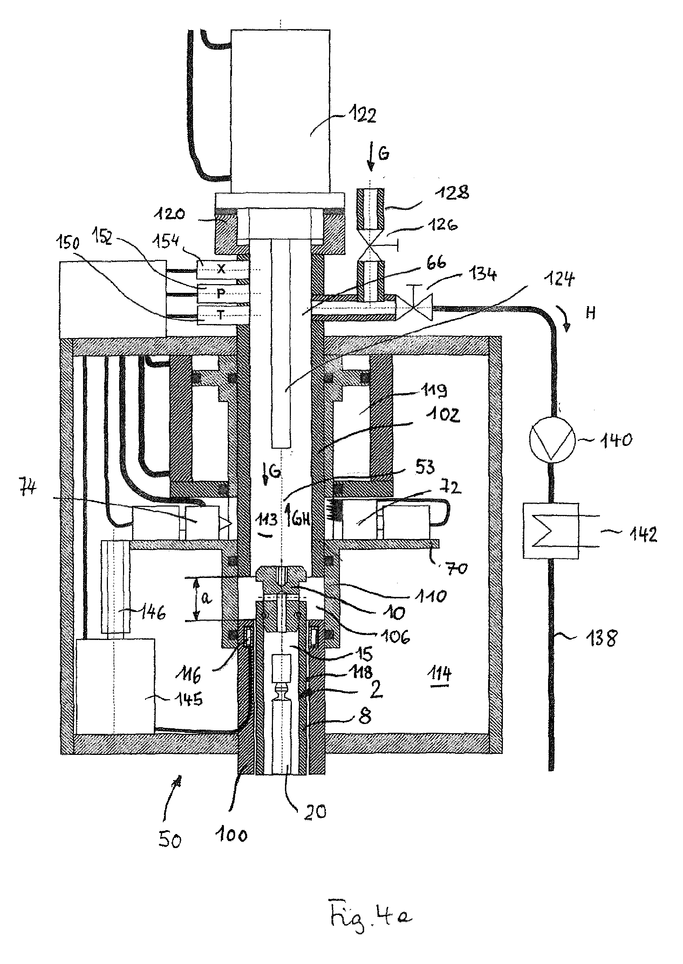

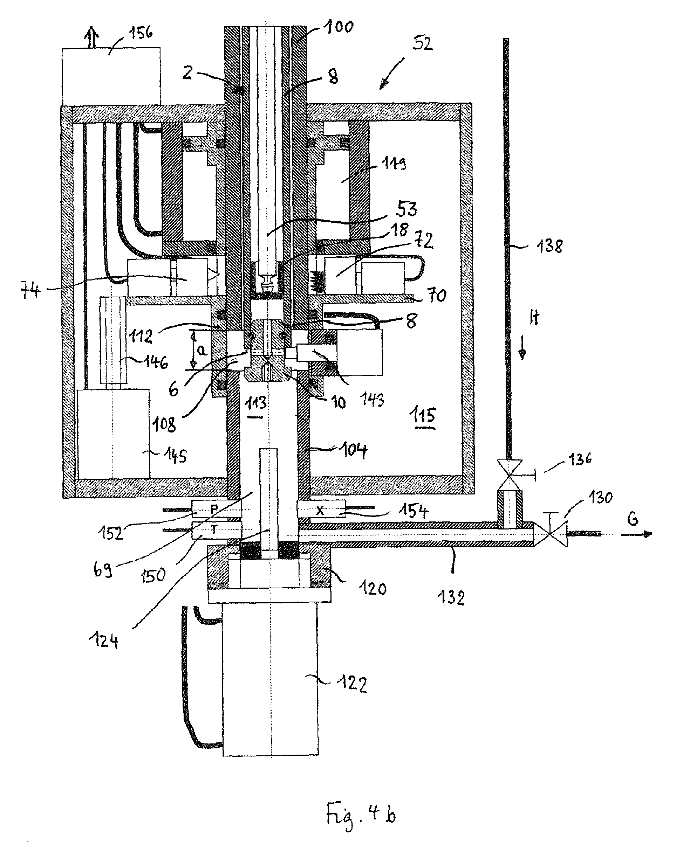

Im Ausführungsbeispiel gemäß Fig. 4a, b sind die beiden Bearbeitungskammern 50, 52 über ein Verbindungsrohr 100 starr und nach außen fluiddicht miteinander verbunden. Dieses Verbindungsrohr 100 ragt mit seinen stirnseitigen Enden in die erste bzw. zweite Bearbeitungskammer 50 bzw. 52 hinein. In das Verbindungsrohr 100 ist der Behälter 2 mit seinem in einer Zwischenposition eingesetzten Verschlussstopfen 10 eingeführt. In dieser Zwischenposition ist der Innenraum 15 des Behälters 2 fluidisch mit dem Außenraum verbunden. Das zylindrische Behälterteil 8 des Behälters 2 ragt beidseitig über das Verbindungsrohr 100 hinaus. In der ersten und zweiten Bearbeitungskammer 50, 52 ist ein Einlassrohr 102 bzw. ein Auslassrohr 104 angeordnet, deren Mittelachsen mit der Systemachse 53 zusammenfallen, und die den Einlass 66 bzw. den Auslass 69 für das Spülgas G bilden.

Das Verbindungsrohr 100 ist zwischen dem in die erste Bearbeitungskammer 50 mündenden Einlassrohr 102 und dem in die zweite Bearbeitungskammer 52 mündenden Auslassrohr 104 mit einem axialen Abstand a angeordnet, so dass zwischen den einander jeweils zugewandten Stirnseiten ein erster bzw. zweiter Freiraum 106 bzw. 108 verbleibt.

Einlassrohr 102 und Verbindungsrohr 100 sowie Verbindungsrohr 100 und Auslassrohr 104 sind in der in Fig. 4a, b dargestellten Arbeitsposition über eine axial verschiebbare und drehbar um die Systemachse 53 gelagerte erste bzw. zweite Hülse 110 bzw. 112 fluiddicht miteinander verbunden und bilden einen geradlinigen, relativ engen Spülraum 113, der fluidisch von einem ersten bzw. zweiten Arbeitsraum 114, 115 der ersten bzw. zweiten Bearbeitungskammer 50, 52 getrennt ist, in denen sich die zum Verschließen des Behälters 2 erforderlichen Werkzeuge und Antriebe befinden.

Das Verbindungsrohr 100 ist an seinem Innenumfang an seinem in die erste Bearbeitungskammer 50 hineinragenden stirnseitigen Ende mit einem einstellbaren Dichtelement 116, im Beispiel ein aufblasbarer Dichtring, versehen, mit dem nach dem Einführen des Behälters 2 in das Verbindungsrohr 100 ein zwischen dem Behälter 2 und dem Verbindungsrohr 100 befindlicher Spaltraum 118 verschlossen werden kann, so dass das im Spülraum 113 strömende Spülgas G ausschließlich durch den Behälter 2 strömt und Einlassrohr und Auslassrohr 102 bzw. 104 ausschließlich über den Behälter 2 fluidisch miteinander verbunden sind. Aufgrund des fluiddicht mit den Bearbeitungskammern 50, 52 verbundenen Verbindungsrohrs 100, reicht es aus, den Spalt mit einem einzigen Dichtelement 116 zu verschließen , um die gewünschte Führung des Spülgases G durch den Behälter 2 zu erzielen.

Mit Hilfe eines in der ersten und zweiten Bearbeitungskammer 50, 52 jeweils angeordneten Hubzylinders 119 können erste und zweite Hülse 110 bzw. 112 axial verschoben werden, so dass der erste bzw. zweite Freiraum 106 bzw. 108 zur ersten bzw. zweiten Bearbeitungskammer 50, 52 hin geöffnet oder verschlossen werden kann.

Die aus den Bearbeitungskammern 50, 52 jeweils hinausragenden Enden des Einlassrohrs 102 bzw. des Auslassrohrs 104 sind jeweils mit einem Stutzen 120 versehen, auf dem dicht ein Hubzylinder 122 aufgesetzt ist, der wie der Hubzylinder 91 im Ausführungsbeispiel der Fig. 3a, b einen axial in Richtung der Systemachse 53 verschiebbaren Druckstempel 124 antreibt, mit dem die Verschlussstopfen 10 in ihre Endposition gedrückt werden können.

An das Einlassrohr 102 ist über ein Ventil 126 eine Gaszufuhrleitung 128 angeschlossen, über die das Spülgas G mit hohem Druck in das Einlassrohr 102 eingeleitet werden kann, um das im Behälter 2 befindliche Wasser auszutreiben. Das in das Auslassrohr 104 austretende Wasser wird dann über eine mit einem Ventil 130 verschließbare Entwässerungsleitung 132 abgeführt.

Einlassrohr 102 und Auslassrohr 104 sind über Zweiwegeventile 134 und 136 an eine Bypassleitung 138 angeschlossen, die Einlassrohr 102 und Auslassrohr 104 in einem geschlossenen Gaskreislauf miteinander verbindet. In dieser Bypassleitung 138 ist eine Pumpe 140 und eine Heizeinrichtung 142 angeordnet, mit denen ein in der Bypassleitung 138 befindliches Heizgas H durch das Einlassrohr 102, den Behälter 2 und das Auslassrohr 104 gepumpt werden kann, um auf diese Weise den im Behälter 2 befindlichen Brennstab 20 zu trocknen. Während dieser Trocknung sind die Ventile 126 und 130 geschlossen.

Zur präzisen Positionierung des Behälters 2 ist die zweite Hülse 112 mit einem radial ausfahrbaren Anschlagelement 143 versehen, auf dem das Behälterteil 8 mit seiner unteren Stirnseite 6 aufsitzt.

Erste und zweite Hülse 110, 112 sind jeweils mit einem ringförmig umlaufenden Flansch versehen, der als Tisch für den Schweißkopf 74 und die Reinigungsbürste 72 dient und der zugleich als Drehkranz 70 gestaltet ist, der mit einem ein von einem Motor 145 angetriebenen Ritzel 146 kämmt, so dass Reinigungsbürste 72 und Schweißkopf 74 um die Systemachse 53 gedreht werden können.

Mit Hilfe von Temperatursensoren 150, Drucksensoren 152 und Feuchtesensoren 154 werden die Temperatur T, der Druck P und die Feuchtigkeit X im Einlassrohr 102 und im Auslassrohr 104 gemessen, um den Fortschritt des Trocknungsvorganges erfassen zu können. Dieser ist beendet, wenn der Feuchtegehalt im Heizgas H einen Endwert erreicht, bei dem der Feuchtegehlt nicht mehr ansteigt und sich dementsprechend kein flüssiges Wasser mehr im Gaskreislauf befindet. Bei bekanntem Volumen des Behälters 2 kann die absolute Menge des innerhalb des Behälters 2 in gasförmiger Phase befindlichen Wassers bestimmt und die Einhaltung von Vorgaben hinsichtlich des maximal zulässigen Wassergehaltes sicher überprüft werden. Um eine vollständige Verdampfung des Wassers zu erzielen ist das Volumen des Gaskreislaufes um ein Vielfaches höher als das Volumen des im Behälter 2 bei eingebrachtem Brennstab 20 befindlichen Hohlraumes.

Nachfolgend wird die Arbeitsweise der Vorrichtung bei der Kapselung eines mit Öffnungen im Bereich seiner Enden versehenen defekten Brennstabes 20 näher erläutert.

Zunächst wird die Vorrichtung geöffnet. Hierzu wird der auf dem Einlassrohr 102 angeordnete obere Hubzylinder 122 von der Vorrichtung demontiert. Vor dieser Demontage sind erste und zweite Hülse 110 bzw. 112 in die in Fig. 4a und b gezeigte Position verschoben worden, in der sie eine fluiddichte Verbindung zwischen dem Einlassrohr 102 und dem Verbindungsrohr 100 und zwischen dem Verbindungsrohr 100 und dem Auslassrohr 104 herstellen, so dass das durch die Demontage des in den aus Einlassrohr 102, Verbindungsrohr 100 und Auslassrohr 104 gebildeten Spülraum 113 eindringende Wasser nicht in die Bearbeitungskammern 50, 52 gelangen kann.

Der diesen Spülraum 113 umgebende Arbeitsraum 114 der Bearbeitungskammern 50, 52 wird außerdem ständig mit Spülgas (nicht dargestellt) beaufschlagt, um auf diese Weise zusätzlich das Eindringen von Wasser zu verhindern.

Anschließend wird der mit dem Brennstab 20 beladene Behälter 2 mit einem in der Fig. 4a nicht dargestellten Handhabungswerkzeug in das Verbindungsrohr 100 eingesetzt bis er auf dem ausgefahrenen Anschlagelement 143 aufsitzt.

Danach wird der Hubzylinder 122 wieder fluiddicht auf den Stutzen 120 montiert. Die nachfolgend erläuterten Vorgänge finden in einer Arbeitsposition der Vorrichtung statt, wie sie sein den Fig. 4a, b dargestellt ist. Nach erfolgter Montage des Hubzylinders wird durch Öffnen des Ventils 126 Spülgas G mit hohem Druck in das Einlassrohr 102 eingeleitet und durch den Inneraum gepresst und bei geöffnetem Ventil 136 zunächst das im Spülraum 113 befindliche Wasser ausgetrieben.

Durch anschließende Beaufschlagung der aufblasbaren Dichtung 116 mit einem Druckgas wird der Spalt zwischen Verbindungsrohr 100 und Behälterteil 8 geschlossen, so dass das Spülgas G ausschließlich durch den Behälter 2 strömt, der auf diese Weise entwässert wird. Bei diesem Vorgang wird über gegebenenfalls zuvor geschaffene Öffnungen am oberen und unteren Ende des Brennstabes 20 (nicht dargestellt) auch Wasser aus dem Brennstab 20 entfernt. Der Gasstrom wird soweit aufrecht erhalten, bis die mit dem am Auslassrohr 104 angeordneten Feuchtesensor 154 gemessene Feuchtigkeit X einen vorgegebenen Grenzwert unterschreitet und hinreichende Trockenheit signalisiert. Anschließend wird gegebenenfalls in der Bypassleitung 138 befindliches Wasser durch Öffnen des Ventils 136 und Inbetriebnahme der Pumpe 140 ausgetrieben. Danach werden die Ventile 128 und 130 geschlossen.

Anschließend wird zum Trocknen des Brennstabes 20 die Heizeinrichtung 142 in Betrieb genommen. Die Pumpe 140 treibt das im Spülraum 113 befindliche Spülgas G über die Heizeinrichtung 142. In der Heizeinrichtung 142 wird das Spülgas G aufgeheizt und gelangt als Heizgas H über die thermisch isolierte Entwässerungsleitung 132 zum Spülraum 113 bis zum unteren Verschlussstopfen 10 des Behälters 2. Von hier gelangt das Heizgas H in das Innere des Behälters 2 zum Filterelement 18. Durch die Führung des Heizgases H in diese Richtung wird das Filterelement 18 von Restwasser freigeblasen, so dass der Durchgang des Heizgases H erleichtert ist. Durch das am Brennstab 20 entlang strömende Heizgas H wird das in ihm in der Brennstoffmatrix befindliche Wasser verdampft und über die zuvor geschaffenen Öffnungen am oberen und unteren Ende des Brennstab 20 in den Behälter 2 freigesetzt und mit dem Heizgas H über den oberen Verschlussstopfen 10 in den Spülraum 113 transportiert. Von dort wird das mit Feuchtigkeit beladene Heizgas H über das Ventil 134 wieder der Pumpe 140 zugeführt. Damit schließt sich der Gaskreislauf. Die Temperatur T des Heizgases H wird über die Temperatursensoren 150 erfasst und über einen Verteiler 156 einer in den Figuren nicht dargestellten Auswerte- und Steuereinheit zugeleitet, die Pumpe 140 und Heizeinrichtung 142 steuert und die Temperatur T auf einen vorgegebenen Sollwert regelt. Die Auswerte- und Steuereinheit steuert außerdem die übrigen in der Vorrichtung befindlichen aktiven Komponenten - Ventile, Pumpe, Bearbeitungsvorrichtungen, Hubzylinder, motorische Antriebe usf.

Die Durchgängigkeit des Heizgases H im Behälter 2 wird über die Drucksensoren 152 überwacht. Das Heizgas H wird solange im Gaskreislauf umgepumpt, bis der obere und untere Feuchtesensor 154 eine hinreichende Sättigung anzeigt. Dies ist der Hinweis, dass das ganze Wasser in der Brennstoffmatrix verdampft ist und keine weitere Freisetzung erfolgt. An diesem Punkt kann die Aufheizung und Umwälzung des Heizgases H abgebrochen werden. Durch Öffnen des Ventils 126 kann frisches Spülgas G zuströmen. Durch zyklisches Öffnen und Schließen des Ventils 130 wird das Spülgas G abwechselnd über die Entwässerungsleitung 132 abtransportiert oder bei durch den Behälter 2 geleitet. Zum Schluss werden die Ventile 130, 134, 136 geschlossen und es wird ein Druckausgleich zwischen Spülraum 113 und Arbeitsraum 114, 115 der Bearbeitungskammern 50, 52 durchgeführt. Anschließend wird das Ventil 126 geschlossen.

Danach wird die erste Hülse 110 mit Hilfe des Hubzylinders 122 auf das Verbindungsrohr 100 aufgeschoben, so dass der Freiraum 106 zum Innenraum der ersten Bearbeitungskammer offen ist und Bürste 72 und Schweißkopf 74 auf Höhe der Stirnseite 4 des Behälterteils 8 liegen. Nach Betätigung des Bürstenvorschubs, d.h. Anstellen der Bürste 72 an den zu reinigenden Kontaktflächen, wird durch Antreiben des Ritzels 146 die erste Hülse 110 in Rotation versetzt und damit auch die Bürste 72 um den Behälter 2 bewegt. Nach dem Reinigen wird die Bürste 72 wieder in Ausgangsstellung zurückgefahren.

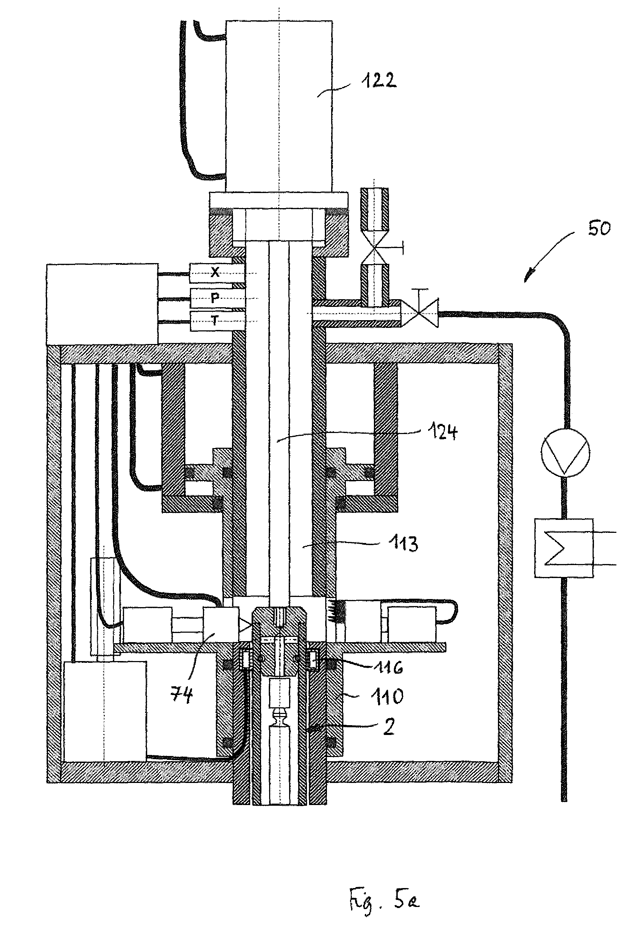

Anschließend wird der Hubzylinder 122 betätigt und mit dessen Kolbenstange wird der obere Verschlussstopfen 10 auf das Behälterteil 8 gedrückt. Danach wird der Schweißkopf 74 radial zugestellt und durch Rotation der ersten Hülse 110 um den Behälter 2 bewegt. Diese Arbeitsposition ist in Fig. 5a dargestellt. Nach der Schweißung wird auch der obere Schweißkopf 74 wieder in Ausgangsstellung gebracht und die Hülse 110 wieder in Ausgangsstellung gebracht.

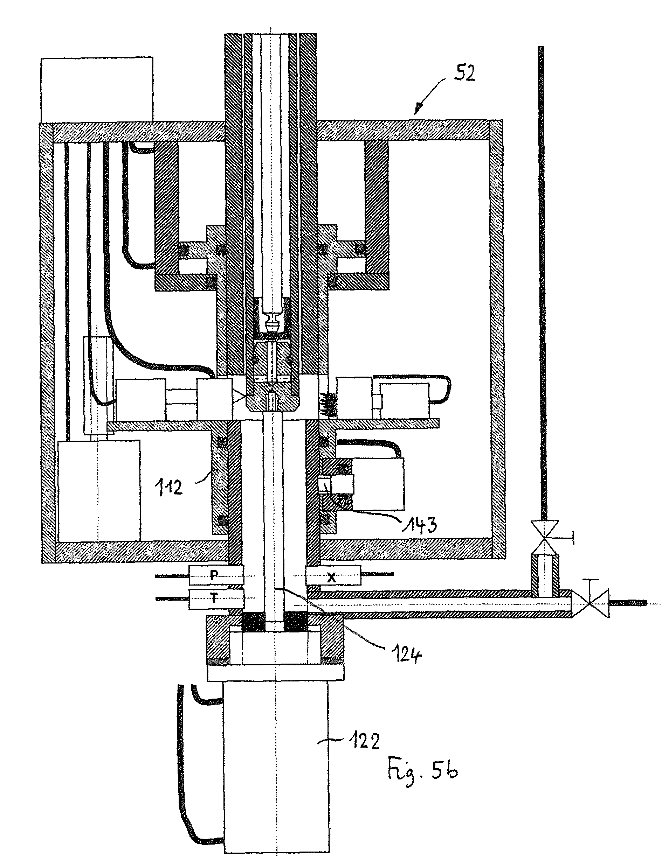

In analoger Weise erfolgt anschließend das Reinigen und Verschweißen in der zweiten Bearbeitungskammer 52, wobei vor dem Verschieben der zweiten Hülse 112 in die zum Reinigen und Verschweißen erforderliche Stellung das Anschlagelement 143 zurück gefahren wird. Fig. 5b zeigt ebenfalls eine Situation, in der der sich der Schweißkopf 74 in Arbeitsposition befindet.

Zum Entnehmen des verschlossenen Behälters 2 wird die Vorrichtung geöffnet. Hierzu wird der Druckstempel 124 des oberen Hubzylinders 122 zurück gefahren und danach von der Vorrichtung demontiert. Durch die Demontage wird der Spülraum 113 der Vorrichtung mit Wasser geflutet. Nun wird der Behälter 2 mit einem Stangenwerkzeug gegriffen, das aufblasbare Dichtelement 116 entlüftet und der Druckstempel 124 des unteren Hubzylinders 122 wieder in Ausgangsstellung gebracht.

Der in Zusammenhang mit den in Fig. 4a, b und 5a, b dargestellte Trocknungsvorgang kann grundsätzlich auch bei der in Fig. 3a, b dargestellten Vorrichtung durchgeführt werden, indem diese um den in Fig. 4a, b und 5a, b dargestellten Heizkreislauf ergänzt wird.

## Patentansprüche

1. Vorrichtung zur gasdichten Kapselung eines in einem Behälter (2) enthaltenen Brennstabes (20) oder Brennstababschnittes in diesem Behälter (2), mit folgenden Merkmalen:
a) die Vorrichtung weist eine erste und eine zweite Bearbeitungskammer (50, 52) auf,
b) erste und eine zweite Bearbeitungskammer (50, 52) sind voneinander beabstandet und auf einer gemeinsamen Systemachse (53) angeordnet,
c) die erste Bearbeitungskammer (50) weist einen Einlass (66) und die zweite Bearbeitungskammer (52) einen Auslass (69) für ein Spülgas (G) auf,
d) jede Bearbeitungskammer (50, 52) weist Mittel zum gasdichten Verschließen des Behälters (2) auf, **gekennzeichnet dadurch dass** erste und zweite Bearbeitungskammer (50, 52) mit einer ersten bzw. zweiten Öffnung (56, 57) zum Aufnehmen eines in die Bearbeitungskammer (50, 52) mündenden Freiendes des Behälters (2) derart versehen sind, dass erste und zweite Bearbeitungskammer (50, 52) bei zwischen diesen angeordnetem Behälter (2) ausschließlich über diesen selbst fluidisch miteinander verbunden werden können.

2. Vorrichtung nach Anspruch 1, bei der erste und zweite Bearbeitungskammer (50, 52) entlang der Systemachse (53) verschiebbar angeordnet sind, und/oder bei der jede Bearbeitungskammer (50, 52) mit einem die Öffnung (56, 57) ringförmig umgebenden und in Richtung der Systemachse (53) zur Öffnung (56, 57) hin zustellbaren Druckstempel (64) versehen ist, mit dem durch Vorschub in Richtung der Systemachse (53) eine Kraft mit einer quer dazu wirkenden Komponente auf einen an der Öffnung (56, 57) angeordneten und diese umgebenden Dichtring (60) ausgeübt wird.

3. Vorrichtung nach Anspruch 1, bei der erste und zweite Bearbeitungskammer (50, 52) entlang der Systemachse (53) über ein mit seinen stirnseitigen Enden in die erste bzw. zweite Bearbeitungskammer (50, 52) hineinragendes Verbindungsrohr (100) miteinander starr verbunden sind, in das der Behälter (2) derart einführbar ist, dass er mit seinen Freienden über das Verbindungsrohr (100) hinausragt.

4. Vorrichtung nach Anspruch 3, bei der Einlass (66) und Auslass (69) jeweils durch ein in die erste bzw. zweite Bearbeitungskammer mündendes Einlassrohr (102) bzw. Auslassrohr (104) gebildet sind, deren Mittelachsen mit der Systemachse (53) zusammenfallen und zwischen denen das Verbindungsrohr (100) jeweils mit einem axialen Abstand (a) angeordnet ist, so dass zwischen den einander zugewandten Stirnseiten ein erster bzw. zweiter Freiraum (106, 108) verbleibt, wobei das Verbindungsrohr (100) an das Einlassrohr (102) und an das Auslassrohr (104) mit einer axial in eine erste Stellung verschiebbar angeordneten ersten bzw. zweiten Hülse (110, 112) fluiddicht anschließbar ist, und wobei erste und zweite Hülse (110, 112) in eine zweite Stellung verschiebbar sind, in der erster und zweiter Freiraum (106, 108) zur ersten bzw. zweiten Bearbeitungskammer (50, 52) hin offen sind.

5. Vorrichtung nach Anspruch 4, bei der zwischen Behälter (2) und Verbindungsrohr (100) zumindest ein Dichtelement (116) angeordnet ist, das derart einstellbar ist, dass die Bearbeitungskammern (50, 52) ausschließlich über den Behälter (2) fluidisch miteinander verbunden werden können.

6. Vorrichtung nach einem der vorhergehenden Ansprüche, bei der Einlass (66) und Auslass (69) über eine außerhalb der Bearbeitungskammern (50, 52) verlaufende Bypassleitung (138) derart miteinander verbindbar sind, dass ein geschlossener Gaskreislauf entsteht, wobei im Gaskreislauf eine Pumpe (140) und eine Heizeinrichtung (142) zum Umwälzen bzw. Heizen eines im Gaskreislauf befindlichen Heizgases (H) angeordnet sind, und/oder bei der jede Bearbeitungskammer (50, 52) einen Druckstempel (92) zum Ausüben einer in Richtung der Systemachse (53) wirkenden Druckkraft aufweist.

7. Vorrichtung nach einem der Ansprüche 1 bis 6, bei der jede Bearbeitungskammer (50, 52) einen drehbar um die Systemachse (53) und zu dieser zustellbar gelagerten Schweißkopf (74) aufweist.

8. Vorrichtung nach Anspruch 7, bei der in jeder Bearbeitungskammer (50, 52) eine drehbar um die Systemachse (53) und zu dieser zustellbar gelagerte Reinigungsbürste (72) angeordnet ist.

9. Vorrichtung nach Anspruch 8, bei der Schweißkopf (74) und Reinigungsbürste (72) auf einem gemeinsamen Drehkranz (70) angeordnet sind.

10. Vorrichtung nach Anspruch 9 in Verbindung mit Anspruch 5, bei der der Drehkranz (70) durch einen an den Hülsen (110,112) jeweils angeordneten ringförmig umlaufenden Flansch gebildet ist.

11. Verfahren zur gasdichten Kapselung eines Brennstabes (20) oder Brennstababschnittes in einem Behälter (2) mit einer Vorrichtung gemäß einem der Ansprüche 1 bis 10, mit folgenden Verfahrensschritten:
a) Einbringen eines Freiendes des mit den Verschlussstopfen (10) in der Zwischenposition versehenen und den Brennstab (20) oder den Brennstababschnitt enthaltenden Behälterteils (8) durch die erste Öffnung (56) in die erste Bearbeitungskammer (50) und des gegenüberliegenden Freiendes durch die zweite Öffnung (57) in die zweite Bearbeitungskammer (52) derart, dass erste und zweite Bearbeitungskammer (50, 52) ausschließlich über diesen selbst fluidisch miteinander verbunden sind,
b) Einblasen eines Spülgases (G) in das Behälterteil (8) und Austreiben des im Behälterteil (8) befindlichen Wassers durch Aufbau eines Überdrucks,
c) Eindrücken des Verschlussstopfens (10) in das Behälterteil (8) bis zur Endposition und fluiddichtes Verbinden des Verschlussstopfens (10) mit dem Behälterteil (8).

12. Verfahren nach Anspruch 11, bei dem durch das Behälterteil (8) nach dem Austreiben des Wassers Heizgas (H) gepumpt wird, und/oder bei dem der Verschlussstopfen (10) mit dem Behälterteil (8) mit einer ringförmig umlaufenden Schweißnaht oder Lötnaht stoffschlüssig verbunden oder im hohlzylindrischen Behälterteil (8) mit einer Schrumpfverbindung fluiddicht fixiert wird.

## Claims

1. Device for gas-tight encapsulation in a container (2) of a fuel rod (20) or fuel rod section contained in this container (2), having the following features:
a) the device has a first and a second processing chamber (50, 52),
b) first and a second processing chamber (50, 52) are at a distance from each other and are arranged on a mutual system axis (53),
c) the first processing chamber (50) has an inlet (66) and the second processing chamber (52) has an outlet (69) for a purge gas (G),
d) each processing chamber (50, 52) has means for gas-tight sealing of the container (2),
**characterised in that**
first and second processing chambers (50, 52) are provided with a first or second opening (56, 57) for receiving a free end of the container (2) leading into the processing chamber (50, 52) in such a way that first and second processing chambers (50, 52) can be connected fluidically to each other in the event of a container arranged between these exclusively via the container itself.

2. Device according to claim 1, in which the first and second processing chambers (50, 52) are arranged to be moveable along the system axis (53) and/or in which each processing chamber (50, 52) is provided with a compression die (64) which surrounds the opening (56, 57) annularly and is able to be supplied towards the opening (56, 57) in the direction of the system axis (53), with which compression die a force having a component acting transversely to this is exerted on a sealing ring (60) arranged on the opening (56, 57) and surrounding this by feeding in the direction of the system axis (53).

3. Device according to claim 1, in which first and second processing chambers (50, 52) are connected rigidly to each other along the system axis (53) via a connecting tube (100) protruding into the first or second processing chamber (50, 52) with its front-side end, in which connecting tube the container (2) is able to be introduced in such a way that it projects over the connecting tube (100) with its free ends.

4. Device according to claim 3, in which inlet (66) and outlet (69) are formed by an inlet tube (102) or outlet tube (104) leading into the first or second processing chamber respectively, the central axes of which coincide with the system axis (53) and between which the connecting tube (100) is arranged at an axial distance (a) respectively, such that a first or second clearance (106, 108) remains between the front sides facing towards each other, wherein the connecting tube (100) is able to be connected to the inlet tube (102) and to the outlet tube (104) in a fluid-tight manner using a first or second sleeve (110, 112) arranged to be moveable axially into a first position, and wherein first and second sleeves (110, 112) are able to move into a second position in which first and second clearances (106, 108) are open towards the first or second processing chambers (50, 52).

5. Device according to claim 4, in which at least one sealing element (116) is arranged between container (2) and connecting tube (100), said sealing element being adjustable in such a way that the processing chambers (50, 52) can be connected fluidically to each other exclusively via the container (2).

6. Device according to one of the preceding claims, in which the inlet (66) and outlet (69) are able to be connected to each other via a bypass line (138) running outside the processing chambers (50, 52) in such a way that a closed gas circuit results, wherein a pump (140) and a heating device (142) are arranged in the gas circuit to circulate or heat a heating gas (H) located in the gas circuit, and/or in which each processing chamber (50, 52) has a compression die (92) to exert a compression force acting in the direction of the system axis (53).

7. Device according to one of claims 1 to 6, in which each processing chamber (50, 52) has a welding head (74) mounted to be rotatable around the system axis (53) and able to be able to be supplied to this.

8. Device according to claim 7, in which a cleaning brush (72) mounted to be rotatable around the system axis (53) and to be able to be supplied to this is arranged in each processing chamber (50, 52).

9. Device according to claim 8, in which the welding head (74) and cleaning brush (72) are arranged on a mutual turntable (70).

10. Device according to claim 9, in connection with claim 5, in which the turntable (70) is formed by an annularly circulating flange arranged on the sleeves (110, 112) respectively.

11. Method for gas-tight encapsulation of a fuel rod (20) or fuel rod section in a container (2) using a device according to one of claims 1 to 10, having the following method steps:
a) introducing a free end of the container part (8) provided with the sealing plugs (10) in the intermediate position and containing the fuel rod (20) or the fuel road section into the first processing chamber (50) through the first opening (56) and introducing the opposite free end into the second processing chamber (52) through the second opening (57) in such a way that first and second processing chambers (50, 52) are connected fluidically to each other exclusively via this itself,
b) blowing a purge gas (G) into the container part (8) and driving out the water located in the container part (8) by forming an overpressure,
c) pushing the sealing plug (10) into the container part (8) up to the end position and connecting the sealing plug (10) to the container part (8) in a fluid-tight manner.

12. Method according to claim 11, in which heating gas (H) is pumped through the container part (8) after driving out the water, and/or in which the sealing plug (10) is connected firmly to the container part (8) using a welding seam or soldering seam which circulates annularly, or is fixed in a fluid-tight manner in the hollow cylindrical container part (8) using a shrink joint.

## Revendications

1. Dispositif pour encapsuler de manière étanche aux gaz un barreau de combustible (20) ou un tronçon de barreau de combustible contenu dans un récipient (2) dans ce récipient (2) ayant les caractéristiques suivantes :
a) Le dispositif présente une première et une deuxième chambre de traitement (50, 52),
b) La première et une deuxième chambre de traitement (50, 52) sont à distance l'une de l'autre et disposées sur un axe système commun (53),
c) La première chambre de traitement (50) présente une entrée (66) et la deuxième chambre de traitement (52) une sortie (69) pour un gaz de purge (G),
d) Chaque chambre de traitement (50, 52) présente des moyens pour la fermeture étanche aux gaz du récipient (2),
**caractérisé en ce que** la première et la deuxième chambre de traitement (50, 52) sont pourvues d'une première respectivement d'une deuxième ouverture (56, 57) destinée à accueillir une extrémité libre du récipient (2) débouchant dans la chambre de traitement de telle sorte que la première et la deuxième chambre de traitement (50, 52) puissent être reliées fluidiquement entre elles exclusivement au moyen du récipient (2), lorsque ce récipient (2) est disposé entre celles-ci.

2. Dispositif selon la revendication 1 dans lequel la première et la deuxième chambre de traitement (50, 52) sont disposées de manière translatable le long de l'axe système (53) et/ou dans lequel chaque chambre de traitement (50, 52) est pourvue d'un piston de pression (64) pouvant être avancé en direction de l'axe système (53) en vue de l'ouverture (56, 57) et entourant tel une bague l'ouverture (56, 57), piston de pression à l'aide duquel, lorsqu'il est avancé en direction de l'axe système (53), une force ayant une composante agissant perpendiculairement à celui-ci, est exercée sur une bague d'étanchéité (60) disposée sur l'ouverture (56, 57) et entourant celle-ci.

3. Dispositif selon la revendication 1, dans lequel la première et la deuxième chambre de traitement (50, 52) sont reliées fixement entre elles, le long de l'axe système, par un tube de liaison (100) dont les extrémités avant pénètrent dans la première ou la deuxième chambre de traitement (50, 52), tube de liaison dans lequel le récipient (2) peut être introduit de telle sorte que ses extrémités libres soient en saillie au-dessus du tube de liaison (100).

4. Dispositif selon la revendication 3, dans lequel l'entrée (66) et la sortie (69) sont respectivement formées par un tube d'entrée (102) ou un tube de sortie (104) débouchant dans la première ou la deuxième chambre de traitement, dont les axes médians coïncident avec l'axe système (53) et entre lesquels est disposé le tube de liaison (100) respectivement à une distance axiale (a), de sorte que, entre les côtés avant se faisant face, il reste un premier ou un deuxième espace libre (106, 108), le tube de liaison (100) pouvant être relié fluidiquement au tube d'entrée (102) et au tube de sortie (104) avec un premier ou un deuxième manchon (110, 112) disposé de manière axialement translatable dans une première position, et le premier et le deuxième manchon (110, 112) pouvant translater dans une deuxième position dans laquelle le premier et le deuxième espace libre (106, 108) sont ouverts en direction de la première ou de la deuxième chambre de traitement (50, 52).

5. Dispositif selon la revendication 2, dans lequel, entre le récipient (2) et le tube de liaison (100) est disposé au moins un élément d'étanchéité (116) pouvant être réglé de telle sorte que les chambres de traitement (50, 52) puissent être reliées fluidiquement entre elles exclusivement par l'intermédiaire du récipient (2).

6. Dispositif selon l'une quelconque des revendication précédentes, dans lequel l'entrée (66) et la sortie (69) peuvent être reliées entre elles par une conduite by-pass (138) passant à l'extérieur des chambres de traitement (50, 52) de manière à créer un circuit de gaz fermé, une pompe (140) et un dispositif de chauffage (142) étant situés dans ce circuit de gaz pour faire recirculer ou chauffer un gaz de chauffage (H) se trouvant dans le circuit de gaz et/ou dans lequel chaque chambre de traitement (50, 52) présente un piston de pression (92) afin d'exercer une force de pression agissant en direction de l'axe système (53).

7. Dispositif selon l'une quelconque des revendications 1 à 6, dans lequel chaque chambre de traitement (50, 52) présente une tête de soudage (74) pouvant pivoter autour de l'axe système (53) et disposée de manière à avancer vers celui-ci.

8. Dispositif selon la revendication 7, dans lequel une brosse nettoyante (72) pouvant pivoter autour de l'axe système (53) et disposée de manière à avancer vers celui-ci, se trouve dans chaque chambre de traitement (50, 52).

9. Dispositif selon la revendication 8, dans lequel la tête de soudage (74) et la brosse nettoyante sont disposées sur une couronne pivotante commune (70).

10. Dispositif selon la revendication 9, en liaison avec la revendication 5, dans lequel la couronne pivotante (70) est formée par un flasque annulaire disposé sur les manchons (110, 112).

11. Procédé d'encapsulage étanche aux gaz d'un barreau de combustible (20) ou d'un tronçon de barreau de combustible dans un récipient (2) avec un dispositif selon l'une quelconque des revendications 1 à 10, comportant les étapes suivantes :
a) Introduction d'une extrémité libre de la partie de récipient (8) dotée du bouchon de fermeture (10) dans la position intermédiaire et contenant le barreau de combustible (20) ou le tronçon de barreau de combustible dans la première chambre de traitement (50) à travers la première ouverture (56) et de l'extrémité libre opposée dans la deuxième chambre de traitement (52) à travers la deuxième ouverture (57) de telle sorte que la première et la deuxième chambre de traitement (50, 52) soient reliées fluidiquement entre elles exclusivement au moyen de celui-ci,
b) Insufflation d'un gaz de purge (G) dans la partie de récipient (8) et expulsion de l'eau se trouvant dans la partie de récipient (8) en créant une surpression,
c) Introduction en pression du bouchon de fermeture (10) dans la partie de récipient (8) jusqu'à la position finale et liaison fluidique du bouchon de fermeture (10) avec la partie de récipient (8).

12. Procédé selon la revendication 11, dans lequel du gaz de chauffage (H) est pompé à travers la partie de récipient (12) après expulsion de l'eau, et/ou dans lequel le bouchon de fermeture (10) est relié, par liaison de matériaux, à la partie de récipient (8) au moyen d'une soudure annulaire ou d'un brasage ou est fixé de manière étanche aux fluides dans la partie de récipient (8) cylindrique creuse au moyen d'une liaison rétractable.
